## Europäisches Patentamt
## European Patent Office
## Office européen des brevets

(11) Publication number: **0 044 631**
**B1**

(12) **EUROPEAN PATENT SPECIFICATION**

(45) Date of publication of patent specification: **27.12.85**

(21) Application number: **81302930.3**

(22) Date of filing: **29.06.81**

(51) Int. Cl.⁴: **C 10 G 11/05, C 10 G 11/04**

(54) **Hydrocarbon cracking process.**

(30) Priority: **18.07.80 US 170220**

(43) Date of publication of application:
**27.01.82 Bulletin 82/04**

(45) Publication of the grant of the patent:
**27.12.85 Bulletin 85/52**

(84) Designated Contracting States:
**AT BE DE FR GB IT SE**

(56) References cited:
**EP-A-0 021 787**
**GB-A-1 281 265**
**GB-A-1 459 953**
**US-A-3 758 403**
**US-A-3 764 519**
**US-A-3 894 931**
**US-A-3 894 933**
**US-A-3 894 934**
**US-A-3 954 671**
**US-A-3 989 619**

(73) Proprietor: **MOBIL OIL CORPORATION**
**150 East 42nd Street**
**New York New York 10017 (US)**

(72) Inventor: **Rosinski, Edward Joseph**
**Route 1-Box 325A**
**Pedricktown New Jersey (US)**
Inventor: **Schwartz, Albert B.**
**1901 John F. Kennedy Blvd Apt. 1204**
**Philadelphia Pennsylvania (US)**

(74) Representative: **West, Alan Harry et al**
**Mobil Court 3 Clements Inn**
**London WC2A 2EB (GB)**

Courier Press, Leamington Spa, England.

# 0 044 631

**Description**

This invention relates to an improved hydrocarbon cracking process for increasing gasoline octane number and total product yield, by the addition of very small amounts of shape-selective promoter to the cracking catalyst.

Conversion processes utilizing crystalline zeolites have been the subject of extensive investigation during recent years. Crystalline zeolites have been found to be particularly effective for a wide variety of organic compound conversion processes, including the catalytic cracking of gas oils to produce motor fuels, as described for example, in U.S. Patents 3,140,249; 3,140,251; 3,140,252; 3,140,253; and 3,271,418. In many cases, the crystalline zeolite is incorporated into a matrix.

In or to reduce automobile exhaust emissions to meet statutory pollution requirements, many automobile manufacturers have equipped the exhaust systems of their vehicles with catalytic converters. Such converters contain catalysts which are poisoned by tetraethyl lead. Since tetraethyl lead has been widely used to boost the octane number of gasoline, refiners now have to turn to alternative means to improve gasoline octane number.

Many methods of octane improvement, however, substantially reduce the yield of gasoline. With ever-diminishing reserves of available crude oil and the concomitant high demand for unleaded gasoline with a sufficiently high octane number, refiners are faced with a severe dilemma.

One method of increasing octane number is to increase the temperature at which the cracking reaction to produce gasoline is carried out. This method, however, is very limited, since many cracking units are now operating at maximum temperature due to metallurgical limitations. Raising the cracker reactor temperature also results in increased requirements for the gas plant (gas compressors and separators). Since most gas plants now operate at maximum capacity, any increased load could not be tolerated by the present equipment.

It has been recognized in U.S. Patent 3,769,202 that a higher octane number can be obtained in the catalytic cracking of gas oils by incorporating a crystalline zeolite having a pore size of less than 7 Angstroms into a catalyst comprising a crystalline zeolite having a pore size greater than 8 Angstroms, either with or without a matrix. However, this results has been achieved at the expense of the overall yield of gasoline.

Improved octane number and overall yield have been achieved in the process of U.S. Patent 3,758,403, in which the cracking catalyst comprises a crystalline zeolite of pore size greater than 7 Angstroms in admixture with a ZSM-5 type zeolite in a ratio of 10:1 to 1:3.

The use of ZSM-5 type zeolite in conjunction with a zeolite cracking catalyst of the X or Y faujasite variety is described in U.S. Patents 3,894,931; 3,894,933; and 3,894,934. The first and second of these patents disclose the use of ZSM-5 type zeolite in amounts up to about 5 to 10 weight percent; the third patent discloses the weight ratio of ZSM-5 type zeolite to large pore crystalline zeolite in the range of 1:10 to 3:1.

The present invention seeks to provide a cracking process which will result in the production of high octane unleaded gasoline without an unacceptable loss of gasoline yield, and which will permit operational flexibility without undue use of expensive catalysts, and is based upon the observation that it is possible significantly to improve the gasoline octane number without unacceptable loss of yield of $C_5^+$ gasoline and alkylate by the addition to the cracking catalyst of a very small amount of particles of additive promoter.

Accordingly, the present invention provides a process for cracking a hydrocarbon chargestock which comprises contacting the hydrocarbon chargestock under cracking conditions with a cracking catalyst comprising an active catalyst component and a matrix, and wherein there has been added to the cracking catalyst in an amount of from 0.01 to 1 weight percent, based on the cracking catalyst, a shape-selective promoter having a silica to alumina mole ratio of above 12 and a constraint index from 1 to 12, in the form of particles thereof having a particle size of less than 5 μm.

Such a process is generally known from EP—A—0021787, which was published on 07/01/1981 and thus belongs to the state of the art within the meaning of Art. 54(3). However, this European application does not disclose this use of a promoter in the form of particles with a size of less than 5 μm.

Whereas it was previously believed that up to about 10 weight percent of additive zeolite, preferably contained in a matrix, was required to boost octane number, the present invention demonstrates quite clearly and very surprisingly that the use of only a very small amount of particulate additive promoter which is not intimately combined with a substantial amount of another solid, will result in a similar beneficial result.

The process of this invention enables cracking to be carried out with greater flexibility than hitherto since only a very small quantity of additive promoter permits the octane number of the product to be boosted. The need for only very small quantities of the additive promoter further enables the use of such techniques as surface coating of the cracking catalyst particles with the additive promoter or dispersion of the latter in the catalytic cracking chargestock prior to contact with the cracking catalyst.

The use according to the invention of the additive promoter directly, that is to say without its prior combination with or incorporation in a matrix, in particle form and in a small amount further provides a simplified method lending itself to flexibility and in savings in promoter usage affording a more efficient and economic overall refinery operation.

2

The shape selective additives used in the process of this invention comprise a class of tectosilicates which are characterized by a silica to alumina mole ratio of at least 12 and a constraint index of 1 to 12. The silica to alumina mole ratio may, at least theoretically, extend up to infinity, that is to say the additive promoter may contain essentially no alumina. The additive promoter, without prior incorporation in a matrix, is introduced to the cracking process as a finely divided powder having a particle size of less than 5 μm.

The finely divided particles of size less than 5 μm will generally be added to the cracking catalyst as a dry powder which serves at least partially to surface coat the catalyst particles or as a dispersion in the catalytic cracking chargestock. It is to be understood, however, that the shape-selective additive promoter may be added in any manner and at any one or more of a variety of points to the catalyst inventory defined as total catalyst in the operating unit, including for example, reactor, regenerator, transfer lines and stripping zones. The additive promoter may also be added in the form of an aqueous slurry or as a suspension in an organic medium, other than the cracking chargestock. The additive promoter can also be introduced to and/or recycled through the recycle feed. The process described herein is applicable to all types of cracking units including FCC (Fluid Catalytic Cracking) units utilizing very finely divided particles of cracking catalyst and TCC (Thermofor Catalytic Cracking) units utilizing a moving bed type reactor. The weight ratio of the additive promoter to the amount of cracking catalyst ranges from about 1:10,000 to about 1:100 and preferably from about 1:5000 to about 1:300.

Addition of the additive promoter, even in very small amounts, is extremely effective as an octane and total yield improver. It has been found that only about 0.01 to 1.0 weight % of this class of zeolites added to the cracking catalyst in the unit under conventional cracking conditions has the surprising ability to increase octane by from about 1 to 5 RON+O (research octane number without lead). If excess alkylation capacity is available, $C_5^+$ gasoline plus alkylate yields are higher when the additive promoter is utilized as compared to conventional commercial cracking catalyst, without sacrificing the octane increase.

Since the additive promoters are very catalytically active in the fresh state, only very small quantities are necessary to obtain substantial octane improvement in a commercial cracking unit. Thus, the refiner is afforded great flexibility in commercial cracking operation, since the additive promoter can be quickly introduced as a finely divided dry powder of less than 5 μm particle size to the cracking catalyst, the added promoter providing an at least partial surface coating on the cracking catalyst particles. Alternatively, the additive promoter may be conveniently dispersed in the catalytic cracking chargestock prior to contacting the latter with the cracking catalyst in the cracking unit. The refiner can efficiently control the magnitude of octane increase by controlling the rate of addition of additive promoter. Such flexibility is highly desirable in situations where feed composition or rate changes occur, when demand for high octane, unleaded gasoline fluctuates, or when capacity for alkylation varies due to mechanical problems or changes in overall refinery operation.

Thus, the process of this invention provides means for controlling octane gain to the extent desired by the introduction of only very small amounts of additive promoter. In commercial practice, the octane gain can be maximized or controlled to operate at maximum light gas handling capability or full alkylation capacity.

The particular proportion of the additive promoter introduced to the cracking catalyst is important since only a very small amount of additive promoter is required to produce substantial octane gain. The weight percent of the additive promoter required in relation to the total quantity of cracking catalyst in the unit ranges from about 0.01 to about 1.0 and is preferably from about 0.02 to about 0.5. The exact weight percent will vary from one cracking unit to another depending upon the desired octane number, total gasoline yield required, the available feedstock and the activity of the cracking catalyst.

In a preferred process of the invention, the additive promoter, in powdered form, is initially introduced as a slurry in a quantity of the chargestock, the slurry being contained in a feed vessel from which it is subsequently displaced with chargestock free of dispersed promoter, into the reactor of the cracking unit where it comes into contact with the cracking catalyst under conventional catalytic cracking conditions. Alternatively, it is possible to pre-react the chargestock in the presence of the additive promoter prior to its introduction into the cracking unit. This may be achieved by controlling the conditions of temperature, pressure, and duration of contact between the chargestock and the additive promoter. The use of additive gases, such as hydrogen, may further be effective during prereaction of the chargestock and additive promoter, and the catalytic demetalation of a high metals-content chargestock may be achieved during the prereaction period. However, once the additive promoter is introduced into the cracking process, the refiner can revert to conventional operation or an operation at lower octane number by eliminating or decreasing the use of additive promoter. Thus, the increase in octane number over the number obtainable under conventional cracking operations can be readily and easily controlled by adjusting the amount of additive promoter.

Catalytic cracking units which are amenable to the process of this invention operate generally within the temperature range of from about 200°C to 700°C and under a pressure of below or above atmospheric pressure. The catalytic cracking process may be operated batchwise or continuously. The catalytic cracking process can be either fixed bed, moving bed or fluidized bed and the flow of hydrocarbon chargestock may be either concurrent or countercurrent to the conventional catalyst flow. The process of this invention is an especially useful adaptation of the fluid catalytic cracking (FCC) process.

A recent advance in the art of catalytic cracking is disclosed in U.S. Patent 4,072,600, one aspect of which teaches that trace amounts of a metal selected from platinum, palladium, iridium, osmium, rhodium, ruthenium, and rhenium, when added to cracking catalysts, enhance significantly the conversion of carbon monoxide during catalyst regeneration. In employing this recent advance in the present invention, the amount of such metal added to the conventional cracking catalyst can vary from about 0.1 ppm to about 100 ppm based on total catalyst inventory. These metals can also be introduced into the process with or as part of the additive promoter in amounts such that the overall content of such metal based on total catalyst in the cracking unit is within the above range.

After cracking, the resulting product gas is suitably compressed and the products may suitably be separated from the remaining components by conventional procedures, for example, adsorption and distillation.

Hydrocarbon chargestocks suitable for cracking in accordance with this invention comprise hydrocarbons generally and, in particular, petroleum fractions having an initial boiling point of at least 200°C, a 50% point of at least 260°C and an end point of at least 315°C. Such hydrocarbon fractions include gas oils, residual oils, cycle stocks, whole top crudes and heavy hydrocarbon fractions derived by the destructive hydrogenation of coal, tar, pitches, asphalts and the like. As will be recognized, the distillation of higher boiling petroleum fractions above about 400°C must be carried out under vacuum in order to avoid thermal cracking. The boiling temperatures utilized herein are expressed for convenience in terms of the boiling points at atmospheric pressure.

The additive porous tectosilicates (porotectosilicate) functioning as octane number promoters in the process of this invention preferably have a pore dimension greater than about 0.5 nm (5 Angstroms), that is they are capable of sorbing paraffins having a single methyl branch, as well as normal paraffins, and are characterized by a silica to alumina mole ratio of at least 12, and by a constraint index of 1 to 12.

The silica to alumina mole ratio may be determined by conventional analysis. This ratio is meant to represent, as closely as possible, the ratio in the rigid framework of the crystal and to exclude aluminum in cationic or other form within the channels. Although additive porotectosilicates with a silica to alumina mole ratio of at least 12 are useful, it is preferred to use zeolites having higher ratios of at least about 30. In some porotectosilicates the upper limit of silica to alumina mole ratio is unbounded, with values of 30,000 and greater, extending at least theoretically up to infinity.

Zeolite A, for example, with a silica to alumina ratio of 2.0, is not useful in this invention, and moreover it has no pore dimension greater than about 0.5 nm (5 Angstroms).

These porotectosilicates constitute a class of natural and synthetic materials characterized by having a rigid crystalline framework structure composed generally of an assembly of atoms each surrounded by tetrahedrally-arranged, shared oxygen atoms, and a precisely defined pore structure. They may comprise substantially pure crystalline silica, i.e. devoid of any added source of alumina, such as, for example, materials described in U.S. Patent 3,941,871 and in *Nature*, Vol. 271 page 512, Feb. 9, 1978. In general, however the shape-selective additive promoters comprise crystals in which at least atoms of silicon or germanium are tetrahedrally coordinated to oxygen atoms to provide a structure of definite configuration having an X-ray diffraction pattern, from the four strongest lines of which can be derived interplanar spacings of 11.1±0.3, 10.0±0.2, 3.85±0.07 and 3.71±0.5 Angstroms, as determined by standard techniques. Such additive promoters include for example, aluminosilicates, gallosilicates, ferrosilicates, borosilicates, chromosilicates, aluminogermanates, phosphosilicates, and galloaluminosilicates. Usually, the additive promoter will be an aluminosilicate, although aluminum may be replaced in part or in entirety by gallium, iron, boron, phosphorus, chromium or mixtures thereof or even eliminated entirely. Silicon may be replaced in part by germanium.

The preferred additive porotectosilicates constitute a class of zeolites which have the ability to induce profound transformations of aliphatic hydrocarbons into aromatic hydrocarbons and are generally highly effective in alkylation, isomerization, disproportionation and other reactions involving aromatic hydrocarbons. Although they have unusually low alumina contents, i.e., high silica to alumina mole ratios, they are very active even with silica to alumina mole ratios exceeding 30. This activity is surprising, since catalytic activity of zeolites is generally attributed to cations associated with framework aluminum atoms. These zeolites retain their crystallinity for long periods in spite of the presence of steam even at high temperatures. In many environments, these zeolites exhibit very low coke-forming capability, conducive to very long times on stream between burning regenerations.

An important characteristic of these zeolites is that their crystal structure provides constrained access to, and egress from, the intracrystalline free space by virtue of having a pore dimension greater than about 0.5 nm (5 Angstroms) and pore windows of about a size such as would be provided by 10-membered rings of tetrahedra linked together by oxygen atoms. A pore dimension greater than about 5 Angstroms enables these zeolites freely to sorb normal hexane, and pore windows of the size of 10-membered rings provides constrained access to some larger molecules.

It is sometimes possible to judge from a known crystal structure whether such constrained access exists. For example, if the only windows in a crystal are formed by 8-membered rings of oxygen atoms, then access by molecules of larger cross-section than normal hexane is substantially excluded and the zeolite is not of the desired type. Although zeolites with windows of 10-member rings are preferred, excessive puckering or pore blockage may render these zeolites substantially ineffective. Similarly, zeolites with windows of 12-membered rings do not generally appear to offer sufficient constraint to produce the advantageous octane number improvement desired in the present invention, although structures can be conceived, due to pore blockage or other cause, that may be operative.

Rather than attempt to judge from crystal structure whether or not a zeolite possesses the necessary constrained access, use is made of the 'constraint index' of the zeolite. The precise meaning of 'Constraint Index' and its determination are fully described in the literature, for example in U.S. Patent 4,118,431. The zeolites used in this invention have a constraint index of from 1 to 12.

The zeolites which may be used in the present process are exemplified by zeolites ZSM-5, ZSM-11, ZSM-12, ZSM-23, ZSM-35, ZSM-38 and other similar materials. ZSM-5 is described in U.S. Patent 3,702,886 and a crystalline material having the X-ray diffraction pattern of ZSM-5, is described in U.S. Reissue Patent 29,948. A high silica ZSM-5, referred to as "silicalite", is described in U.S. Patent 4,061,724. ZSM-11 is described in U.S. Patent 3,709,979; ZSM-12 is described in U.S. Patent 3,832,449; ZSM-23 is described in U.S. Patent 4,076,842; ZSM-35 is described in U.S. Patent 4,016,245; and ZSM-38 is described in U.S. Patent 4,046,859.

Natural zeolites may sometimes be converted to this class of zeolites by various activation procedures and other treatments such as base exchange, steaming, alumina extraction and calcination, alone or in combination. Natural minerals which may be so treated include ferrierite, brewsterite, stilbite, dachiardite, epistilbite, heulandite and clinoptilolite. However, the most preferred zeolite for use as promoter in the present invention is ZSM-5.

The zeolites used as additive promoters in this invention may be in the as-synthesized form, sodium form, ammonium form or hydrogen form or they may be base exchanged or impregnated to contain other elements such as rare earth cation complement. Such rare earth cations comprise Sm, Nd, Pr, Ce and La. It is desirable to calcine the zeolite after base exchange. In some cases it may be desirable further to modify the zeolite by thermal or steam treatment.

In a preferred feature of this invention, the promoter zeolites are those having a crystal framework density, in the dry hydrogen form, of not substantially below about 1.6 grams per cubic centimeter. The significance and determination of crystal framework density is fully described in the literature, for example, in U.S. Patent 4,118,431, which also enumerates the crystal framework densities of a wide variety of zeolites.

The zeolite promoters utilized in the process of this invention may be prepared in various ways. Particles of more than 10 µm may be obtained by using appropriate synthesis techniques, and particles of less than 5 µm may be obtained in the as-synthesized form or by grinding larger particles to the requisite particle size.

While in the case of many catalysts, it is desirable to incorporate the zeolite component of the catalyst in a matrix, the zeolite promoters utilized in the present process are employed without prior combination with a matrix. Thus, the zeolite promoter is in a substantially pure form, that is to say, it is not intimately combined or otherwise associated with any substantial amount of other solid prior to contact with the conventional cracking catalyst.

Conventional cracking catalysts contain active components which may be amorphous or crystalline. However, the major conventional cracking catalysts presently in use generally comprise a crystalline zeolite as the active component in a suitable matrix. Representative crystalline zeolite active components of cracking catalysts include zeolite X (U.S. Patent 2,882,244), zeolite Y (U.S. Patent 3,130,007), synthetic mordenite and dealuminized synthetic mordenite, as well as naturally occurring zeolites, including chabazite, faujasite, mordenite, and the like. Preferred crystalline zeolites include natural faujasite and the synthetic faujasite zeolites X and Y, with particular preference being accorded to zeolite Y.

In general, these crystalline zeolites are ion exchanged either separately or in the final catalyst composition with a desired cation to replace alkali metal present in the zeolite as found naturally or as synthetically prepared. The exchange treatment reduces the alkali metal content of the final catalyst to less than about 1.5 weight percent and preferably less than about 0.5 weight percent. The purpose of ion exchange is to substantially remove alkali metal cations which are known to be deleterious to cracking, as well as to introduce particularly desired catalytic activity by means of the various cations used in the exchange medium. For the cracking operation described herein, preferred cations are hydrogen, ammonium, rare earth and mixtures thereof, with particular preference being accorded to rare earth. Ion exchange is suitably accomplished by conventional contact of the zeolite with a suitable salt solution of the desired cation, for example the sulfate, chloride or nitrate.

It is preferred to have the crystalline zeolite of the cracking catalyst in a suitable matrix, since this catalyst form is generally characterized by a high resistance to attrition, high activity and exceptional steam stability. Such catalysts are readily prepared by dispersing the crystalline zeolite in a suitable inorganic oxide, generally a sol, and gelling the sol by various means. Such inorganic oxides include silica gel and cogels of silica and a suitable metal oxide. Representative cogels include silica-alumina, silica-magnesia, silica-zirconia, silica-thoria, silica-beryllia, silica-titania, and ternary combinations such as silica-alumina-magnesia, silica-alumina-zirconia and silica-magnesia-zirconia. Preferred cogels include silica-alumina, silica-zirconia and silica-alumina-zirconia. These gels and cogels will generally comprise a major proportion of silica and a minor proportion of the other oxide or oxides. Thus, the silica content of the siliceous gel or cogel matrix will generally be from 55 to 100 weight percent, preferably from 60 to 95 weight percent, and the other metal oxide or oxides content will generally be from 0 to 45 weight percent and preferably from 5 to 40 weight percent. In addition, the matrix may also contain natural or synthetic clays, such as kaolin type clays, montmorillonite, bentonite or halloysite. These clays may be used either alone or in combination with silica or any of the above specified cogels in matrix formulation.

Where a matrix is used, the content of crystalline zeolite, for example zeolite Y component, is generally from about 5 to about 50 weight percent. Ion exchange of the zeolite to replace its initial alkali metal content can be accomplished either prior to or subsequent to incorporation of the zeolite into the matrix.

Such catalyst compositions may be readily processed to provide fluid cracking catalysts by spray drying the composite to form microspheroidal particles of suitable size. Alternatively, the composition may be adjusted to suitable concentration and temperature to form bead type catalyst particles suitable for use in moving bed type cracking systems. The catalyst may also be used in various other forms such as those obtained by tabletting, balling or extruding.

The following examples illustrate the invention.

Example 1

FS30, a commercially available FCC catalyst manufactured by Filtrol Corporation and consisting of 16—17 weight percent RENaY in a clay-gel matrix, was steamed for 4 hours at 760°C with 100% steam at atmospheric pressure in a fluidized bed to simulate the deactivation of cracking catalysts occurring in commercial operation.

Catalytic cracking of a gas oil was carried out utilizing the steamed FS30 catalyst. The chargestock employed was Joliet Sour Heavy Gas Oil having the following properties:

| | |
|---|---|
| Gravity, °API | 4.3 |
| Sulfur, % Wt | 1.87 |
| Nitrogen, % Wt | 0.03 |
| Basic nitrogen, ppm | 327 |
| CCR, % Wt | 0.29 |
| Aniline point, °C | 77.2 |
| KV—98.9°C, cs | 3.62 |
| Bromine No. | 4.2 |
| Hydrogen, % Wt | 12.3 |
| Refractive index—70°C | 1.50801 |
| Molecular weight | 358 |

Distillation, °C (D-1160)

| | |
|---|---|
| IBP | 212 |
| 5% vol | 287 |
| 10 „ | 323 |
| 20 „ | 353 |
| 30 „ | 372 |
| 40 „ | 389 |
| 50 „ | 408 |
| 60 „ | 427 |
| 70 „ | 448 |
| 80 „ | 469 |
| 90 „ | 496 |
| 95 „ | 513 |

| Composition, % Wt | |
|---|---|
| Paraffins | 23.5 |
| Naphthenes | 32.0 |
| Aromatics | 44.5 |
| $C_4$, (ndm) | 18.9 |

Cracking was carried out in a fixed-fluidized bed bench unit at 516°C, at a weight hourly space velocity of about 12.5 and a catalyst/oil ratio of 2.

Example 2

A sample of Na ZSM-5 having a crystallite size of 0.02—0.05 µm was precalcined in nitrogen for 3 hours, then contacted for 2 hours with 10 weight percent aqueous $NH_4Cl$ solution at 93°C using 10 cc of solution per gram of zeolite. This contact resulted in ion exchange with formation of $NH_4$ ZSM-5. Following the exchange, the zeolite product was water-washed essentially free of chloride ion and dried at 110°C. The dried $NH_4$ ZSM-5 so obtained was ground to a finely divided particle size of less than 5 µm. The steamed FS30 catalyst of Example 1 in an amount of 135 grams was coated with 200 ppm of the resulting $NH_4$ ZSM-5 powder.

Using this promoted catalyst, cracking was carried out with the gas oil chargestock and under the process conditions described in Example 1. Comparative catalytic cracking data obtained from Examples 1 and 2 are set out in the following Table I.

TABLE I

| | Example 1 | Example 2 | |
|---|---|---|---|
| Conversion, vol. % | 74.9 | 74.4 | |
| $C_5^+$ Gasolin, „ | 63.1 | 64.5 | +1.4 |
| Total $C_4$, „ | 17.0 | 17.6 | +0.6 |
| Dry gas, wt % | 5.9 | 4.5 | −1.4 |
| Coke, „ | 3.8 | 3.6 | −0.2 |
| $C_5^+$ Gasoline O.N. (R+O) | 88 | 88.9 | +0.9 |

From these results, it will be seen that at approximately the same level of conversion, the promoted catalyst of Example 2 gave a 1.4 volume percent gain in $C_5^+$ gasoline yield and an octane gain of 0.9. These gains occurred with a simultaneous reduction of 1.4 weight percent of dry gas and a reduction of 0.2 weight percent coke.

Examples 3—7

A slurry of zeolite additive promoter in a gas oil charge was conducted to a feed vessel, from which it was gradually displaced by fresh chargestock free of dispersed promoter. The slurry was then conducted through a preheater, where it was preheated to about 482°C prior to entering the cracking unit for contact with the catalyst.

The chargestock was a hydrotreated Arab Light Atmospheric Resid having the following properties:

| | |
|---|---|
| Ni, ppm | 0.8 |
| V, pm | 0.6 |
| Gravity, °API | 22.2 |
| Sulfur, % Wt | 0.38 |
| Nitrogen, ppm | 0.08 |
| Basic nitrogen, % Wt | 311 |
| CCR, % Wt | 3.46 |
| Aniline point, °C | 96.2 |
| KV—98.9°C, cs | 13.04 |
| Bromine No. | 1.6 |
| Hydrogen, % Wt. | 12.50 |
| Refractive index—70°C | 1.49101 |
| Molecular weight | 453 |
| | |
| Distillation, °C (D-1160) | |
| IBP | 327 |
| 5% Vol | 363 |
| 10 „ | 380 |
| 20 „ | 401 |
| 30 „ | 422 |
| 40 „ | 443 |
| 50 „ | 465 |
| 60 „ | 494 |
| 70 „ | 527 |
| | |
| Composition, % wt | |
| Paraffins | 23.9 |
| Naphthenes | 26.1 |
| Aromatics | 50.0 |
| $C_4$, (ndm) | 17.4 |

8

Cracking was carried out in a fixed fluidized bed bench unit at a temperature of 516°C at a weight hourly space velocity of about 16 and a catalyst/oil ratio of 1.5.

Example 3 used the base catalyst, that is, the steamed FS30 catalyst of Example 1. Examples 4 to 7 used zeolite additive promoter added via the chargestock to the steamed FS30 catalyst of Example 1. Example 4 used 0.25 weight percent (on catalyst basis) of HZSM-5 of 0.02—0.05 μm crystallite size and a $SiO_2/Al_2O_3$ mole ratio of 64; Example 5 used the same catalyst as Example 4 for second cycle evaluation with no additional zeolite additive promoter; Example 6 used 0.25 weight percent HZSM-5, having a $SiO_2/Al_2O_3$ mole ratio of about 1500; and Example 7 used 0.25 weight percent of ZSM-5 containing only 15 ppm of $Al_2O_3$, i.e. essentially a silica form of ZSM-5. The results obtained are set out in the following Table II.

TABLE II

| Example | 3 | 4 | 5 | 6 | 7 |
|---|---|---|---|---|---|
| | | Added to steamed filtrol FS30 in the HDTALR** | | | |
| | Steamed filtrol FS30 | 0.25 wt% HZSM-5 $SiO_2/Al_2O_3$ =64 | As example 6 2nc cycle, no additive | 0.24 wt% HZSM-5 $SiO_2/Al_2O_3$ =1500 | 0.25 wt% ZsM-5 15 ppm $Al_2O_3$ |
| Conversion, vol % | 70.8 | 75.7 Δ* | 74.9 Δ* | 75.1 Δ* | 73.7 Δ* |
| $C_{5+}$ Gasoline, vol % | 66.5 | 59.8 (−6.7) | 64.8 (−1.7) | 66.1 (−0.4) | 63.9 (−2.6) |
| Total $C_4$'s, vol % | 16.9 | 21.8 (+4.9) | 14.7 (−2.2) | 15.6 (−1.3) | 16.0 (−0.9) |
| Dry gas, wt. % | 3.9 | 6.0 (+2.1) | 5.1 (+1.2) | 4.4 (+0.5) | 4.4 (+0.5) |
| Coke, wt.% | 5.2 | 5.4 (+0.2) | 5.4 (+0.2) | 5.1 (−0.1) | 5.2   0 |
| $C_{5+}$ Gasoline O.N. (R+O) | 85.4 | 90.2 (+4.8) | 87 (+1.6) | 86.4 (+1.0) | 86.7 (+1.3) |
| $\Delta C_{5+}/\Delta O.N.$ | | −1.4 | −1.0 | −0.4 | −2 |

* variation from Example 3
** Hydrotreated Arab Light Resid

From the above results, it will be seen that an octane number gain as high as +4.8 can be achieved. Although some loss of $C_5^+$ gasoline yield does occur, this loss per octane number increase is limited to the range of 0.4 to 2.

Examples 8—11

The catalytic cracking chargestock used in these examples was Joliet Sour Heavy Gas Oil having the properties described above. Cracking was carried out in a fixed-fluidized bed bench unit at a temperature of 516°C, at a weight hourly space velocity in the range of 11—12 and a catalyst/oil ratio of 2.

Example 8 used the base catalyst, that is the steamed Filtrol FS30 catalyst of Example 1. Examples 9 and 10 used the same steamed FS30 catalyst of Example 1 to which 0.25 weight percent and 0.125 weight percent, respectively (on catalyst basis) of HZSM-5 of 0.02—0.05 μm crystallite size and a $SiO_2/Al_2O_3$ mole ratio of about 64 had been added dispersed in the gas oil feed. Example 11 also used FS30 but to which 0.25 weight percent of HZSM-5 having a $SiO_2/Al_2O_3$ mole ratio of about 1500 had been added dispersed in the gas oil feed. The results obtained are set out in the following Table III.

9

### TABLE III

| Example | 8 | 9 | | 10 | | 11 | |
|---|---|---|---|---|---|---|---|
| | | Added to steamed FS30 in JSHGO** | | | | | |
| | Steamed filtrol FS30 | 0.25 Wt% HZSM-5 $SiO_2/Al_2O_3$=64 | | 0.125 Wt% HZSM-5 $SiO_2/Al_2O_3$=64 | | 0.25 Wt% HZSM-5 $SiO_2/Al_2O_3$=1500 | |
| Conversion, vol % | 75.2 | 73.7 | Δ* | 74.5 | Δ* | 74.9 | Δ* |
| $C_5^+$ Gasoline, vol % | 59.9 | 54.9 | (−5) | 57.7 | (−2.2) | 58.1 | (−1.8) |
| Total $C_4$'s, vol % | 19.7 | 18.8 | (−0.9) | 17.3 | (−2.4) | 20.2 | (+0.5) |
| Dry gas, wt% | 6.3 | 8.7 | (+2.5) | 8.4 | (+1.9) | 6.7 | (+0.4) |
| Coke, wt% | 4.3 | 4.4 | (−0.1) | 4.5 | (+0.2) | 4.3 | (+0.4) |
| $C_5^+$ Gasoline, O.N. (R+O) | 89.1 | 90.6 | (+1.5) | 90.6 | (+1.5) | 90.8 | (+1.7) |

\* variation from Example 8
\** Joliet Sour Heavy Gas Oil

#### Examples 12—14

The catalytic cracking chargestock used in these examples was Joliet Sour Heavy Gas Oil having the properties described above. Cracking was carried out in a fixed-fluidized bed bench unit at a temperature of 513—516°C, at a weight hourly space velocity of 10 and a catalyst/oil ratio of 2.4—2.5.

Example 12 used the base catalyst, that is the steamed FS30 catalyst of Example 1. Examples 13 and 14 used zeolite additive promoter added directly to the equilibrium fluid FS30. Example 13 used 1.0 weight percent (on catalyst basis) of ZSM-5 of 10×20×50 μm particle size and a $SiO_2/Al_2O_3$ mole ratio of 70. Example 14 used 1.0 weight percent of ZSM-5 of 10×20×40 to 10×20×50 μm particle size and a $SiO_2/Al_2O_3$ mole ratio of 90. The results obtained are set out in following Table IV.

### TABLE IV

| Example | 12 | 13 | | 14 | |
|---|---|---|---|---|---|
| | | Added directly to fluid FS30 | | | |
| | Steamed filtrol FS30 | 1.0 Wt% ZSM-5 $SiO_2/Al_2O_3$=70 | | 1.0 Wt% ZSm-5 $SiO_2/Al_2O_3$=90 | |
| Conversion, vol % | 68.3 | 68.8 | Δ* | 67.6 | Δ* |
| $C_5^+$ Gasoline, vol % | 55.5 | 49.0 | (−6.5) | 50.7 | (−4.8) |
| Total $C_4$'s vol % | 13.1 | 13.9 | (+0.8) | 15.1 | (+2.0) |
| Dry gas, wt% | 7.7 | 13.1 | (+5.4) | 9.0 | (+2.2) |
| Coke, wt% | 3.01 | 2.81 | (−0.20) | 2.97 | (−0.04) |
| $C_5^+$ Gasoline O.N. (R+O) | 89.2 | 91.6 | (+2.4) | 91.4 | (+2.2) |

\* variation from Example 12

**Claims**

1. A process for cracking a hydrocarbon chargestock which comprises contacting the hydrocarbon chargestock under cracking conditions with a cracking catalyst comprising an active catalyst component and a matrix, and wherein there has been added to the cracking catalyst a shape-selective promoter having a silica to alumina mole ratio of about 12 and a constraint index from 1 to 12, the shape-selective promoter having been added in an amount of 0.01 to 1 weight percent, based on the cracking catalyst, in the form of particles thereof having a particle size of less than 5 μm.

**0 044 631**

2. A process according to claim 1, wherein the shape-selective promoter has been added in an amount of 0.02 to 0.5 weight percent.

3. A process according to claim 1 or claim 2, wherein the shape-selective promoter is ZSM-11, ZSM-23, ZSM-35 or ZSM-38.

4. A process according to claim 1 or claim 2, wherein the shape-selective promoter is ZSM-5.

5. A process according to any one of claims 1 to 4, wherein the shape-selective promoter contains essentially no alumina.

6. A process according to any one of claims 1 to 5, wherein the shape-selective promoter has been added as a dry powder so as at least partially to surface coat the particles of cracking catalyst.

7. A process according to any one of claims 1 to 5, wherein the shape-selective promoter has been added as a dispersion in the hydrocarbon chargestock.

8. A process according to claim 7, wherein the shape-selective promoter has prereacted with the hydrocarbon chargestock.

9. A process according to any one of claims 1 to 5, wherein the shape-selective promoter has been added to the catalyst inventory.

10. A process according to claim 9, wherein the shape-selective promoter has been added as an aqueous slurry.

11. A process according to claim 9, wherein the shape-selective promoter has been added as a suspension in an organic medium other than the cracking chargestock.

12. A process according to claim 9, wherein the shape-selective promoter has been added with recycle feed.

13. A process according to claim 9, wherein the shape-selective promoter has been added to the cracking catalyst in a regenerator therefor.

14. A process according to any one of claims 1 to 13, wherein the active catalyst component is zeolite X or zeolite Y.

15. A process according to any one of claims 1 to 14, which is a fluid catalytic cracking process.

16. A process according to any one of claims 1 to 14, which is a moving bed catalytic cracking process.


**Patentansprüche**

1. Verfahren zum Cracken eines Kohlenwasserstoffausgangsstoffes, gekennzeichnet durch Kontaktieren des Kohlenwasserstoffausgangsstoffes unter Crackbedingungen mit einem Crackkatalysator, der eine aktive Katalysatorkomponente und eine Matrix umfaßt, und worin zu dem Crackkatalysator ein formselektiver Promotor mit einem Siliciumdioxid/Aluminiumoxid-Moverhältnis von über 12 und einem Zwangsindex von 1 bis 12 zugegeben wurde, wobei der formselektive Promotor in einer Menge von 0,01 bis 1 Gew.-% bezogen auf den Crackkatalysator zugegeben wurde, in Form von Partikeln davon mit einer Partikelgröße von weniger als 5 μm.

2. Verfahren nach Anspruch 1, dadurch gekennzeichnet, daß der formselektive Promotor in einer Menge von 0,02 bis 0,5 Gew.-% zugegeben wird.

3. Verfahren nach Anspruch 1 oder 2, dadurch gekennzeichnet, daß der formselektive Promotor ZSM-11, ZSM-23, ZSM-35 oder ZSM-38 ist.

4. Verfahren nach Anspruch 1 oder 2, dadurch gekennzeichnet, daß der formselektive Promotor ZSM-5 ist.

5. Verfahren nach einem der Ansprüche 1 bis 4, dadurch gekennzeichnet, daß der formselektive Promotor im wesentlichen kein Aluminiumoxid enthält.

6. Verfahren nach einem der Ansprüche 1 bis 5, dadurch gekennzeichnet, daß der formselektive Promotor als ein trockenes Pulver zugegeben wird, um mindestens teilweise die Oberfläche der Partikel des Crackkatalysators zu überziehen.

7. Verfahren nach einem der Ansprüche 1 bis 5, dadurch gekennzeichnet, daß der formselektive Promotor als eine Dispersion in den Kohlenwasserstoffausgangsstoff zugegeben wird.

8. Verfahren nach Anspruch 7, dadurch gekennzeichnet, daß der formselektive Promotor mit dem Kohlenwasserstoffausgangsstoff vorreagiert wird.

9. Verfahren nach einem der Ansprüche 1 bis 5, dadurch gekennzeichnet, daß der formselektive Promotor zu dem Katalysatorbestand zugegeben wird.

10. Verfahren nach Anspruch 9, dadurch gekennzeichnet, daß der formselektive Promotor als eine wässrige Aufschlämmung zugegeben wird.

11. Verfahren nach Anspruch 9, dadurch gekennzeichnet, daß der formselektive Promotor als eine Suspension in einem organischen Medium verschieden vom Crackausgangsstoff zugegeben wird.

12. Verfahren nach Anspruch 9, dadurch gekennzeichnet, daß der formselektive Promotor mit dem Rücklaufzufluß zugegeben wird.

13. Verfahren nach Anspruch 9, dadurch gekennzeichnet, daß der formselektive Promotor zu dem Crackkatalysator in einem Regenerator dafür zugegeben wird.

14. Verfahren nach einem der Ansprüche 1 bis 13, dadurch gekennzeichnet, daß die aktive Katalysatorkomponente Zeolith-X oder Zeolith-Y ist.

11

15. Verfahren nach einem der Ansprüche 1 bis 14, dadurch gekennzeichnet, daß es ein katalytisches Fluid-Crackverfahren ist.

16. Verfahren nach einem der Ansprüche 1 bis 14, dadurch gekennzeichnet, daß es ein katalytisches Fließbettverfahren ist.

**Revendications**

1. Un procédé de craquage d'une charge hydrocarbonée qui consiste à mettre la charge hydrocarbonée en contact dans des conditions de craquage avec un catalyseur de craquage constitué d'un composant actif et d'une matrice et dans lequel on a ajouté au catalyseur de craquage un promoteur sélectif de forme dont le rapport molaire silice/alumine est supérieure à 12 et l'indice de contrainte est égal à 1 à 12, le promoteur sélectif de forme étant ajouté en quantité de 0,01 à 1% en poids par rapport au catalyseur de craquage sous la forme de particules dont les dimensions sont inférieures à 5 µm.

2. Un procédé selon la revendication 1, dans lequel le promoteur sélectif de forme est ajouté en quantité de 0,02 à 0,5% en poids.

3. Un procédé selon la revendication 1 ou 2, dans lequel le promoteur sélectif de forme est la ZSM-11, ZSM-23, ZSM-35 ou ZSM-38.

4. Un procédé selon la revendication 1 ou 2, dans lequel le promoteur sélectif de forme est la ZSM-5.

5. Un procédé selon l'une quelconque des revendications 1 à 4, dans lequel le promoteur sélectif de forme ne contient sensiblement pas d'alumine.

6. Un procédé selon l'une quelconque des revendications 1 à 5, dans lequel le promoteur sélectif de forme est ajouté sous la forme de poudre sèche de façon à créer au moins partiellement un revêtement superficiel des particules par le catalyseur de craquage.

7. Un procédé selon l'une quelconque des revendications 1 à 5, dans lequel le promoteur sélectif de forme est ajouté sous la forme d'une dispersion dans la charge hydrocarbonée.

8. Un procédé selon la revendication 7, dans lequel le promoteur sélectif de forme a subi une préréaction avec la charge hydrocarbonée.

9. Un procédé selon l'une quelconque des revendications 1 à 5, dans lequel le promoteur sélectif de forme est ajouté à la masse du catalyseur.

10. Un procédé selon la revendication 9, dans lequel le promoteur sélectif de forme est ajouté sous la forme d'une bouillie aqueuse.

11. Un procédé selon la revendication 9, dans lequel le promoteur sélectif de forme est ajouté sous la forme d'une suspension dans un milieu organique différent de la charge de craquage.

12. Un procédé selon la revendication 9, dans lequel le promoteur sélectif de forme est ajouté en même temps que la charge recyclée.

13. Un procédé selon la revendication 9, dans lequel le promoteur sélectif de forme est ajouté au catalyseur de cracking dans un régénérateur de ce catalyseur.

14. Un procédé selon l'une quelconque des revendications 1 à 13, dans lequel le composant catalyseur actif est une zéolite X ou une zéolite Y.

15. Un procédé selon l'une quelconque des revendications 1 à 14, qui est un procédé de craquage catalytique fluide (FCC).

16. Un procédé selon l'une quelconque des revendications 1 à 14, qui est un procédé de craqauage catalytique en lit mobile.